# FASCICULE DE BREVET EUROPEEN

(11) **EP 3 197 641 B1**
(45) Date de publication et mention de la délivrance du brevet: **04.07.2018**
(21) Numéro de dépôt: 15767506.7
(22) Date de dépôt: 24.09.2015
(51) Int. Cl.: B25B 23/00, F16B 39/10

(54) **DISPOSITIF FORMANT CLE POUR LE MAINTIEN D'UN FREIN D'ECROU**
SCHLÜSSELVORRICHTUNG ZUM HALTEN EINES MUTTERHALTERS
KEY DEVICE FOR HOLDING A NUT RETAINER

(30) Priorité: 25.09.2014 FR 1459051
(43) Date de publication de la demande: 02.08.2017
(73) Titulaire: Electricité de France, 75008 Paris (FR)
(72) Inventeur: GUYOMARD, Christophe, 49680 VIVY (FR)
(74) Mandataire: Regimbeau
(86) Numéro de dépôt international: PCT/EP2015/072036
(87) Numéro de publication internationale: WO 2016/046342

(56) Documents cités:
- DE-A1- 2 938 192
- FR-A- 1 211 898

## Description

La présente invention concerne le domaine des dispositifs utilisant des freins d'écrou à aileron d'arrêt. Un dispositif formant clé destiné à maintenir un frein d'écrou selon le préambule de la revendication 1 est connu du document DE 29 38 192 A.

On connait différents type de freins d'écrou à aileron d'arrêt.

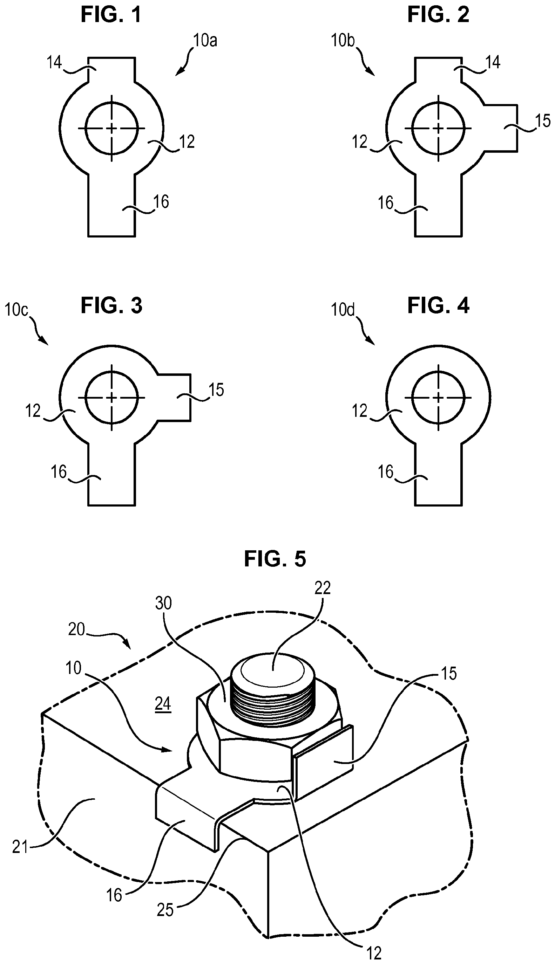

On a représenté sur les figures 1 à 4 annexées quatre types de freins connus.

On a ainsi représenté sur la figure 1 un frein 10a comprenant une rondelle 12 adaptée pour être engagée sur une tige filetée ou liaison vissée, un aileron 14 radial destiné à être rabattu après serrage contre le flan d'un écrou et une languette 16 ou aileron allongé destiné à être rabattu contre une portion d'un corps portant la liaison filetée associée à l'écrou. Selon la figure 1 l'aileron 14 et la languette 16 sont diamétralement opposés par rapport à l'axe de la rondelle 12.

On a représenté sur la figure 2 une variante de réalisation d'un frein 10b selon laquelle la rondelle 12 est munie d'un aileron 14 et d'une languette 16 diamétralement opposés, et comprenant en outre un aileron additionnel 15 orienté radialement à 90 degrés de l'aileron 14 et de la languette 16.

La figure 3 représente une variante de frein 10c selon laquelle la rondelle 12 est équipée d'un aileron radial 15 et d'une languette radiale 16 orientés à 90 degré l'un de l'autre.

La variante de frein 10d représenté sur la figure 4 comprend simplement une rondelle 12 et une languette radiale 16 destinée à être rabattue contre le corps portant la liaison vissée. Dans ce cas de préférence il est prévu des moyens limitant la rotation entre la rondelle 12 et l'écrou associé, par exemple par friction ou par crantage.

La figure 5 illustre l'utilisation des freins d'écrous 10 précités. On retrouve sur la figure 5 un corps 20 portant une liaison vissée ou tige filetée 22 destinée à recevoir un écrou 30.

La figure 7 représente une vue axiale des mêmes moyens.

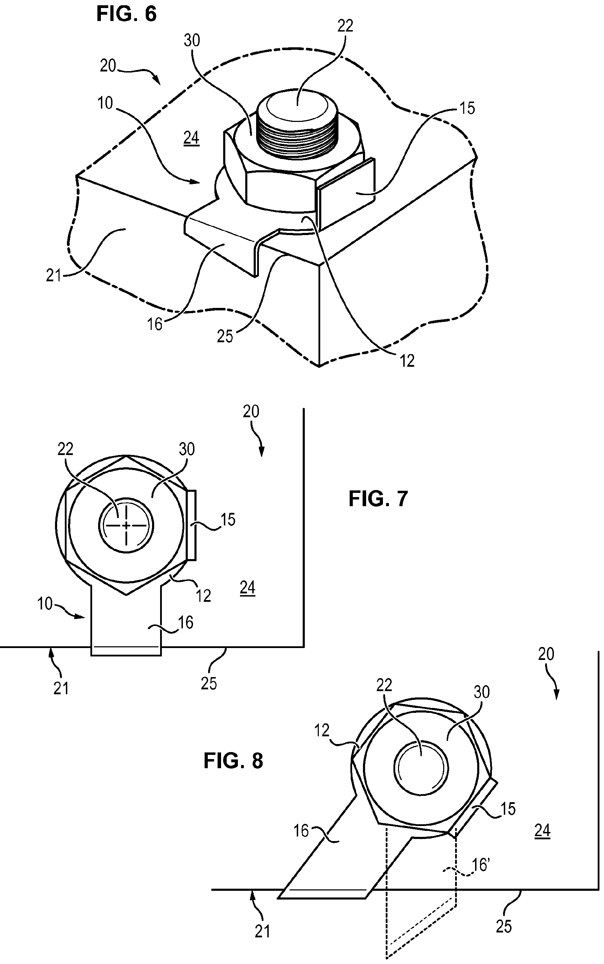

Comme on le voit sur les figures 5 et 7, une fois l'écrou 30 serré sur la liaison 22 au couple recherché, l'aileron 15 est rabattu contre le flan de l'écrou 30 et la languette 16 est rabattue d'équerre c'est-à-dire perpendiculairement au plan moyen de la rondelle 12 et parallèlement à l'axe de la liaison 22, sur un flan 21 du corps 20.

L'écrou 30 est ainsi en principe immobilisé en rotation, au couple de serrage, sur le corps 20.

Selon la figure 5 l'arrête 25 sur laquelle la languette 16 est rabattue et qui sépare le flan 21 et la surface 24 du corps 20 portant la liaison filetée 22, est rectiligne.

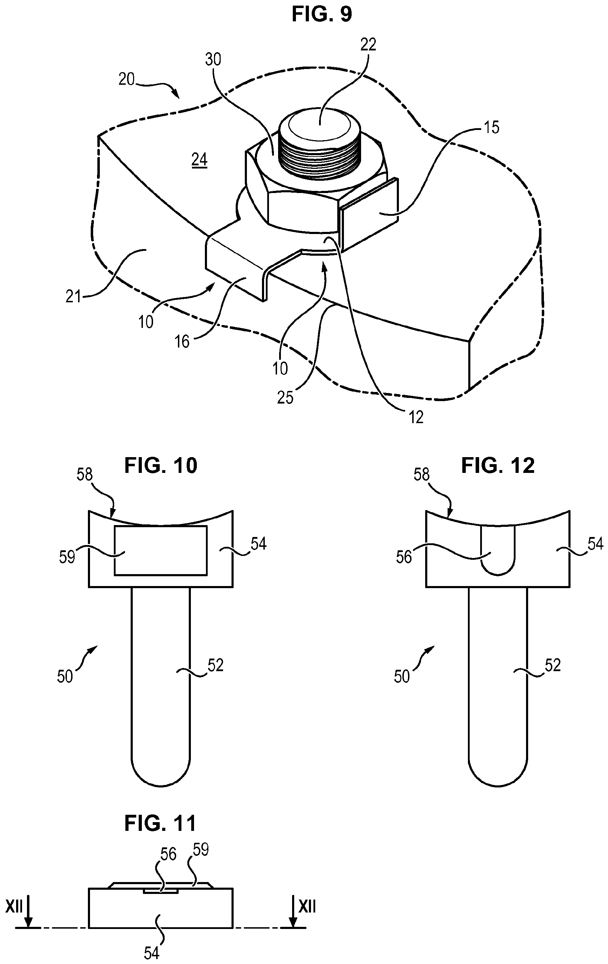

Selon la variante de réalisation représentée sur la figure 9 cette arrête 25 est incurvée. Néanmoins le fonctionnement reste le même.

Les écrous à aileron d'arrêt précités mis en oeuvre selon les modalités représentées sur les figures 5, 7 et 9 ont déjà rendu de grands services.

Cependant il s'avère que lorsque la languette 16 n'est pas correctement positionnée par rapport à l'arrête 25, comme illustrée sur la figure 6, le frein d'écrou 10 ne remplit pas complètement son rôle en ce sens qu'il n'interdit pas un desserrage de l'écrou 30 et par conséquent ne permet pas de maintenir en toute certitude le couple de serrage nominal obtenu.

A titre d'illustration on a représenté sur la figure 8 en trait plein la position occupée à titre d'exemple par la languette 16 en position rabattue oblique et en traits interrompus la position dans laquelle la languette est susceptible d'être déplacée ensuite, par exemple suite à des vibrations. L'homme de l'art comprendra que le passage de la languette de la position en trait continu à la position en traits interrompus illustré sur la figure 8, conduit à un desserrage de l'écrou 30.

Dans ce contexte la présente invention a pour objectif de perfectionner l'état de la technique en proposant des moyens permettant de garantir un meilleur fonctionnement des freins d'écrou, de faciliter leur mise en place et d'accélérer les opérations de serrage.

On notera qu'il est particulièrement important dans certains contextes, par exemple celui d'intervention dans des opérations de maintenance en centrale nucléaire, de procéder rapidement au serrage correct d'écrou sur de nombreux équipements.

Le but précité est atteint selon l'invention grâce à un dispositif formant clé destiné à maintenir un frein d'écrou en position radiale selon la revendication 1. D'autres caractéristiques, buts et avantages de la présente invention apparaitront à la lecture de la description détaillée qui va suivre, faite à titre d'exemples non limitatifs et en référence aux dessins annexés sur lesquels :
- Les figures 1 à 4 précédemment décrites représentent schématiquement 4 variantes de réalisation de freins d'écrou à aileron d'arrêt susceptibles d'être utilisés dans le cadre de la présente invention,
- La figure 5 représente un exemple de mise en oeuvre classique d'un frein d'écrou,
- La figure 7 représente un vue axiale des mêmes dispositions,
- La figure 6 représente une vue schématique d'un mauvais positionnement du frein d'écrou,
- La figure 8 représente un vue similaire axiale en cas de mauvais positionnement du frein d'écrou,
- La figure 9 représente une variante de la figure 5 avec un corps ayant une arête courbe sur laquelle la languette d'un frein d'écrou est rabattue,
- La figure 10 représente une vue latérale d'une clé conforme à la présente invention,
- La figure 11 représente une vue en bout de la même clé conforme à la présente invention,
- La figure 12 représente une vue partiellement en coupe de la clé selon le plan de coupe référencée XII - XII sur la figure 11,

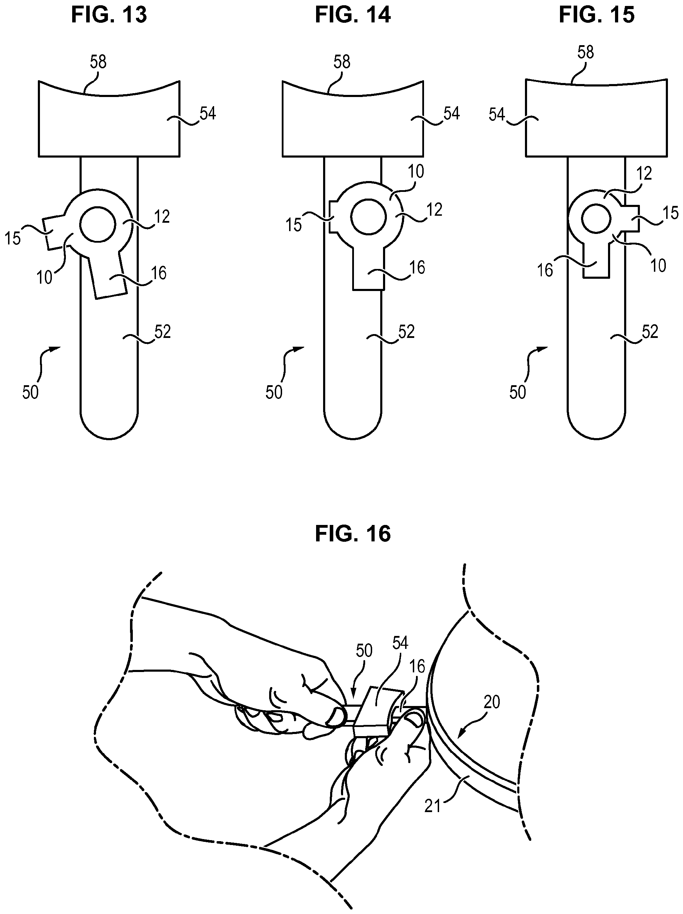

- Les figures 13, 14 et 15 représentent 3 variantes de réalisation de clés conformes à la présente invention et illustrent ensemble un jeu de clés susceptibles d'être mis à la disposition d'utilisateurs en fonction des dimensions et de la nature du frein d'écrou sélectionné, et

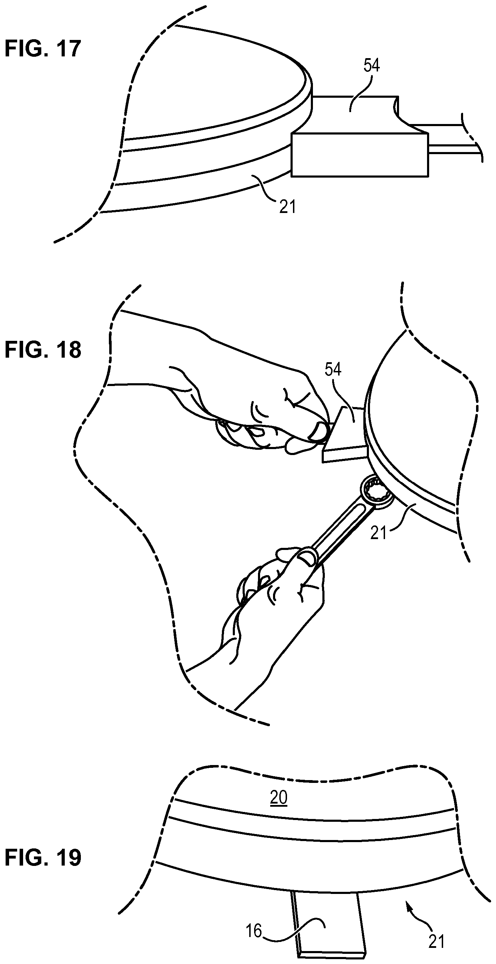

- Les figures 16, 17, 18 et 19 illustrent 4 étapes successives d'utilisation de la clé conforme à la présente invention, la figure 16 représentant schématiquement le blocage en position radiale d'un frein d'écrou par engagement de la languette de ce frein dans le logement d'une clé selon l'invention, la figure 17 représente schématiquement la clé conforme à l'invention accolée à un corps pour positionner un frein d'écrou, la figure 18 représente l'opération de serrage et la figure 19 représente le résultat obtenu selon l'invention d'une languette de frein d'écrou parfaitement radiale par rapport à l'enveloppe extérieure du corps.

Les freins d'écrou 10 susceptibles d'être utilisés dans le cadre de la présente invention sont connus en soi, par exemple conformes aux illustrations données sur les figures 1 à 4 et ne seront donc pas décrits dans le détail par la suite.

Comme l'homme de l'art le sait de tels freins d'écrous sont disponibles en différents matériaux et selon diverses dimensions selon les applications visées.

Comme on l'a indiqué précédemment, comme illustré sur les figures 10, 11 et 12 annexées, l'invention concerne un dispositif 50 formant clé qui comprend un manche 52 qui porte une tête 54, à l'une de ses extrémités. La tête 54 comporte un logement 56. Ce logement 56 est de géométrie et de dimensions adaptées pour recevoir la languette 16 d'un frein d'écrou 10. La face 58 de la tête 54 opposée au manche 52 est de géométrie complémentaire d'une portion 21 du corps 20 portant la liaison filetée 22. Selon la représentation donnée sur les figures 10 et 12 annexées la face précitée 58 est cylindrique de révolution autour d'un axe perpendiculaire aux faces principales du manche 52. L'axe précité est ainsi de préférence parallèle à l'axe de la liaison filetée 22. En d'autres termes les génératrices qui forment la face 58 s'étendent parallèlement à l'axe de la liaison filetée et ainsi cette face 58 est destinée à venir en appui contre une face 21 du corps 20 qui elle-même est définie par des génératrices qui s'étendent parallèlement à l'axe de la liaison filetée. Cette face 58 est cylindrique concave selon les figures 10 et 12.

Le logement 56 qui débouche sur la face 58, peut être réalisé selon de nombreux moyens appropriés, par exemple par creusure dans la masse de la tête 54. Selon un mode de réalisation avantageux illustré sur les figures 10 à 12 annexées, le logement 56 peut être réalisé simplement par usinage d'une cavité de dimensions et géométrie appropriées complémentaires de la languette 16 sur une face principale de la tête 54, puis recouvrement de cette cavité 56 par une plaque de couverture 59.

La clé 50 est de préférence réalisée en métal.

On va maintenant décrire l'essentiel de son utilisation au regard des figures 16 à 19 annexées.

Dans un premier temps comme illustré sur la figure 16, un frein d'écrou est mis en place sur une liaison filetée 22 et la languette 16 est orientée globalement perpendiculairement à la face extérieure 21 du corps 20, puis l'extrémité libre de la languette 16 est engagée dans le logement 56.

La clé 50 est repoussée comme illustré sur la figure 17 pour porter sa face d'appui 58 en contact contre le flan 21 du corps 20 portant la liaison vissée sur lequel est engagé le frein d'écrou 10 associé.

Il suffit alors de maintenir la clé 50 en contact avec la surface extérieure 21 du corps 20 tout en opérant l'opération de serrage de l'écrou comme schématisé sur la figure 18 pour garantir un positionnement correct de la languette 16 par rapport au flan 21 du corps 20, comme illustré sur la figure 19.

La présente invention permet ainsi de garantir le maintien de l'écrou 30 au couple de serrage nominal recherché une fois la languette 16 rabattue d'équerre à 90 degrés du plan de la rondelle, parallèlement à l'axe de l'écrou, le long du flan 21.

L'homme de l'art comprendra que la clé conforme à l'invention permet un geste sûr et rapide sans complication de mise en oeuvre et sans surcoût conséquent.

Comme illustré sur les figures 13, 14 et 15 dans le cadre de l'invention il est proposé un jeu de clés 50 dont les logements 56 sont respectivement adaptés à la géométrie et aux dimensions des languettes 16 des freins d'écrou concernés.

## Revendications

1. Dispositif formant clé destiné à maintenir un frein d'écrou (10) en position radiale, lors du serrage de l'écrou (30) sur une liaison vissée associée (22), comprenant un manche (52) ainsi qu'une tête (54) **caractérisé en ce que** la tête comporte un logement (56) dans lequel peut s'insérer une languette (16) du frein d'écrou (10), laquelle languette (16) est destinée à être rabattue à 90° sur un corps (20) portant la liaison vissée (22), après serrage de l'écrou (30), une face (58) de la tête (54) étant de géométrie complémentaire d'une portion (21) du corps (20) portant la liaison filetée (22) qui reçoit l'écrou (30), de sorte que la languette (16) du frein d'écrou (10), insérée dans la tête (54) de la clé (50) soit maintenue parfaitement perpendiculairement à la surface extérieure de ladite portion (21) du corps (20) lors du serrage de l'écrou (30).

2. Dispositif selon la revendication 1, **caractérisé par le fait que** la tête (54) comprend une cavité (56) correspondant au logement, recouverte d'une plaque (59) rapportée.

3. Dispositif selon la revendication 1, **caractérisé par le fait que** le logement (56) est réalisé par creusure dans la masse dans la tête (54).

4. Dispositif selon l'une des revendications 1 à 3, **caractérisé par le fait que** le logement (56) est de profondeur et de dimensions adaptées à la languette (16) d'un frein d'écrou (10).

5. Dispositif selon l'une des revendications 1 à 4, **caractérisé par le fait que** la face (58) de la tête (54) de géométrie complémentaire d'une portion du corps (20) est cylindrique de révolution.

6. Dispositif selon l'une des revendications 1 à 4, **caractérisé par le fait que** la face (58) de la tête (54) de géométrie complémentaire d'une portion du corps (20) est plane.

7. Jeu de clés conformes à l'une des revendications 1 à 6, **caractérisé par le fait que** chaque clé (50) comprend un logement (56) de géométrie et dimensions adaptées à une languette (16) d'un frein d'écrou respectif.

## Patentansprüche

1. Einen Schlüssel bildende Vorrichtung zum Festhalten einer Mutternbremse (10) in radialer Position beim Festziehen der Mutter (30) auf einer zugehörigen verschraubten Verbindung (22), umfassend einen Griff (52) sowie einen Kopf (54), **dadurch gekennzeichnet, dass** der Kopf eine Aufnahme (56) umfasst, in die eine Zunge (16) der Mutternbremse (10) eingefügt werden kann, wobei die genannte Zunge (16) dazu bestimmt ist, nach dem Festziehen der Mutter (30) um 90° auf einen Körper (20) umgeschlagen zu werden, der die verschraubte Verbindung (22) trägt, wobei eine Seite (58) des Kopfes (54) eine komplementäre Geometrie eines Abschnitts (21) des Körpers (20) aufweist, der die Gewindeverbindung (22) trägt, die die Mutter (30) derart aufnimmt, dass die Zunge (16) der Mutternbremse (10), die in den Kopf (54) des Schlüssels (50) eingefügt ist, beim Festziehen der Mutter (30) absolut lotrecht zur äußeren Oberfläche des genannten Abschnitts (21) des Körpers (20) gehalten wird.

2. Vorrichtung gemäß Anspruch 1, **gekennzeichnet durch** die Tatsache, dass der Kopf (54) eine der Aufnahme entsprechende Ausnehmung (56) umfasst, die mit einer versetzten Platte (59) abgedeckt ist.

3. Vorrichtung gemäß Anspruch 1, **gekennzeichnet durch** die Tatsache, dass die Aufnahme (56) per Höhlung in der Masse in dem Kopf (54) realisiert ist.

4. Vorrichtung gemäß einem der Ansprüche 1 bis 3, **gekennzeichnet durch** die Tatsache, dass die Aufnahme (56) eine an die Zunge (16) einer Mutternbremse (10) angepasste Tiefe und daran angepasste Abmessungen aufweist.

5. Vorrichtung gemäß einem der Ansprüche 1 bis 4, **gekennzeichnet durch** die Tatsache, dass die Seite (58) des Kopfes (54) mit einer zu einem Abschnitt des Körpers (20) komplementären Geometrie revolutionszylindrisch ist.

6. Vorrichtung gemäß einem der Ansprüche 1 bis 4, **gekennzeichnet durch** die Tatsache, dass die Seite (58) des Kopfes (54) mit einer zu einem Abschnitt des Körpers (20) komplementären Geometrie eben ist.

7. Schlüsselsatz gemäß einem der Ansprüche 1 bis 6, **gekennzeichnet durch** die Tatsache, dass jeder Schlüssel (50) eine Aufnahme (56) mit einer Geometrie und Abmessungen umfasst, die an eine Zunge (16) einer jeweiligen Mutternbremse angepasst sind.

## Claims

1. Key device intended to hold a nut retainer (10) in the radial position, when tightening the nut (30) on an associated screw connection (22), comprising a handle (52) as well as a head (54) **characterised in that** the head comprises a housing (56) into which a tab (16) of the nut retainer (10) can be inserted, said tab (16) is intended to be folded 90° on a body (20) carrying the screw connection (22), after tightening of the nut (30), with one face (58) of the head (54) having geometry that matches a portion (21) of the body (20) carrying the threaded connection (22) that receives the nut (30), in such a way that the tab (16) of the nut retainer (10), inserted into the head (54) of the key (50) is held exactly perpendicular to the outer surface of said portion (21) of the body (20) when tightening the nut (30).

2. Device according to claim 1, **characterised by** the fact that the head (54) comprises a cavity (56) corresponding to the housing, covered with an added plate (59).

3. Device according to claim 1, **characterised by** the fact that the housing (56) is carried out by hollowing in the mass in the head (54).

4. Device according to one of claims 1 to 3, **characterised by** the fact that the housing (56) is of a depth and dimensions suited for the tab (16) of a nut retainer (10).

5. Device according to one of claims 1 to 4, **characterised by** the fact that the face (58) of the head (54) with geometry that matches a portion of the corps (20) is of cylindrical revolution.

6. Device according to one of claims 1 to 4, **characterised by** the fact that the face (58) of the head (54) with geometry that matches a portion of the body (20) is flat.

7. Set of keys in accordance with one of claims 1 to 6, **characterised by** the fact that each key (50) comprises a housing (56) with geometry and dimensions suited to a tab (16) of a respective nut retainer.
